# EUROPEAN PATENT APPLICATION

(11) **EP 4 124 051 A1**
(43) Date of publication of application: **25.01.2023**
(21) Application number: 21186453.3
(22) Date of filing: 19.07.2021
(51) Int. Cl.: H04N 21/443, H04N 21/488, H04N 21/414, H04N 21/431, G06F 1/3234, G06F 3/147

(54) **METHOD FOR CONTROLLING VIDEO PLAYING, APPARATUS, AND COMPUTER DEVICE THEREOF**

(71) Applicant: Oneplus Technology (Shenzhen) Co., Ltd., Shenzhen, Guangdong 518000 (CN)
(72) Inventor: HUANG, Nanyan, Shenzhen, Guangdong 518042 (CN)
(74) Representative: Manitz Finsterwald Patent- und Rechtsanwaltspartnerschaft mbB

(57) **Abstract**

The present disclosure relates to a method for controlling video playing, an apparatus, and a computer device thereof. The method includes: monitoring (102) a state of a current application process in response to an application playing a video; obtaining (104) the state of the current application process; dynamically adjusting (106) a signal reception frequency of the application and receiving (106) a screen refresh synchronization signal distributed by a hardware layer according to the signal reception frequency in response to detecting no trigger event in the current application process; resuming (108) the application to receive the screen refresh synchronization signal distributed by the hardware layer at an original frequency in response to detecting a trigger event in the current application process; and triggering (110) a main thread to refresh a current video screen according to the received screen refresh synchronization signal.

## Description

### TECHNICAL FIELD

The present disclosure relates to the field of computer technologies, and in particular to a method for controlling video playing, an apparatus, and a computer device thereof.

### BACKGROUND

With the development of computer technologies, various types of video playing applications are becoming more and more available. When users use different applications for high definition (HD) video playing, they can also send pop-up messages to interact with the currently playing video in real time. Conventionally, to ensure the picture quality of video playing and the smoothness of the operating interface, a high refresh rate of the screen hardware is maintained for video playing.

However, in the current common way of video playing, when the refresh rate of the screen hardware is maintained at a high level, too much power will be consumed, resulting in excessive power consumption. When the refresh rate of the screen hardware is directly reduced, then the smoothness of the operating interface will be affected during the video playing.

### SUMMARY OF THE DISCLOSURE

Based on this, it is necessary to provide a method for controlling video playing, an apparatus, and a computer device thereof to solve the above problem.

A method for controlling video playing is provided, including: monitoring a state of a current application process in response to an application playing a video; obtaining the state of the current application process including a state with a trigger event and a state without a trigger event; dynamically adjusting a signal reception frequency of the application and receiving a screen refresh synchronization signal distributed by a hardware layer according to the signal reception frequency in response to detecting no trigger event in the current application process; resuming the application to receive the screen refresh synchronization signal distributed by the hardware layer at an original frequency in response to detecting a trigger event in the current application process; and triggering a main thread to refresh a current video screen according to the received screen refresh synchronization signal.

In some embodiments, the dynamically adjusting the signal reception frequency of the application includes: sieving the screen refresh synchronization signal according to a preset configuration parameter and obtaining a sieved screen refresh synchronization signal; and trigger a main thread to render the current video screen by calling a frame function to send a message to the main thread according to the sieved screen refresh synchronization signal.

In some embodiments, the method further includes: triggering a state change of a preset flag bit in response to receiving the screen refresh synchronization signal from a hardware layer via an abstraction layer interface; and determining whether to allow the application to receive the screen refresh synchronization signal distributed by the hardware layer according to the changed state of the preset flag bit.

In some embodiments, the determining whether to allow the application to receive the screen refresh synchronization signal distributed by the hardware layer according to the changed state of the preset flag bit includes: receiving the screen refresh synchronization signal distributed by the hardware layer currently in response to the changed state of the preset flag bit being zero; and skipping the screen refresh synchronization signal distributed by the hardware layer currently in response to the changed state of the preset flag bit not being zero.

In some embodiments, after the resuming the application to receive the screen refresh synchronization signal distributed by the hardware layer at the original frequency in response to detecting the trigger event in the current application process, the method further includes: obtaining delay time corresponding to the pop-up message by calling a function program in response to detecting a pop-up message in the current application process; and at each callback to the frame function, triggering the main thread to refresh the pop-up message in the current video screen by adding the delay time.

In some embodiments, before the obtaining the delay time corresponding to the pop-up message by calling the function program, the method further includes: obtaining time interval for the current application process to receive the screen refresh synchronization signal; obtaining a screen refresh rate corresponding to the current application process according to the time interval of the screen refresh synchronization signal; and determining whether to add the delay time to refresh the pop-up message in the current video screen according to the screen refresh rate.

In some embodiments, after the resuming the application to receive the screen refresh synchronization signal distributed by the hardware layer at the original frequency in response to detecting the trigger event in the current application process, the method further includes: in response to detecting a pop-up message in the current application process, sieving the screen refresh synchronization signal according to a preset configuration parameter and obtaining a sieved screen refresh synchronization signal; and triggering the main thread to refresh a current pop-up message by calling a frame function to send a message to the main thread according to the sieved screen refresh synchronization signal.

In some embodiments, the dynamically adjusting the signal reception frequency of the application includes: intercepting or skipping the screen refresh synchronization signal every other frame.

An apparatus for controlling video playing is provided, including:
a monitoring module, configured to monitor a state of a current application process in response to an application playing a video;
an obtaining module, configured to obtain the state of the current application process, including a state with a trigger event and a state without a trigger event;
a detection module, configured to: in response to detecting no trigger event in the current application process, dynamically adjust a signal reception frequency of the application and receive a screen refresh synchronization signal distributed by a hardware layer according to the signal reception frequency; and
in response to detecting a trigger event in the current application process, resume the application to receive the screen refresh synchronization signal distributed by the hardware layer at an original frequency; and
a refresh module, configured to trigger a main thread to refresh a current video screen according to the received screen refresh synchronization signal.

A computer device is provided, including a memory and a processor; wherein the memory stores a computer program, and the processor is configured to execute the computer program to perform the method as described above.

In the embodiments of the provided method, apparatus, computer device and storage medium for controlling video playing, in response to an application playing a video, a state of a current application process is monitored. Compared with conventional video playing methods, the state of the current application process is obtained, including a state with a trigger event and a state without a trigger event. In response to detecting no trigger event in the current application process, a signal reception frequency of the application is dynamically adjusted, a screen refresh synchronization signal distributed by a hardware layer is received according to the signal reception frequency, and a main thread is triggered to refresh a current video screen according to the received screen refresh synchronization signal. In response to detecting a trigger event in the current application process, the application is resumed to receive the screen refresh synchronization signal distributed by the hardware layer at an original frequency, and a main thread is triggered to refresh a current video screen according to the received screen refresh synchronization signal. Thus, by monitoring the state of the current application process, when a trigger event is detected in the current application process, the corresponding signal reception frequency is dynamically adjusted; when a trigger event is detected in the current application process, the application is resumed to receive the screen refresh synchronization signal distributed by the hardware layer at the original frequency. That is, the software refresh rate is dynamically adjusted, effectively solving the power consumption problem of maintaining a high screen hardware refresh rate in the conventional way, ensuring the smoothness of the operation interface and reducing power consumption.

### BRIEF DESCRIPTION OF THE DRAWINGS

FIG. 1 is a flowchart of a method for controlling video playing according to an embodiment of the present disclosure.
FIG. 2 is a flowchart of dynamically adjusting the signal reception frequency according to an embodiment of the present disclosure.
FIG. 3 is a flowchart of triggering state change of a preset flag bit according to an embodiment of the present disclosure.
FIG. 4 is a flowchart of calling a function program to calculate delay time corresponding to a pop-up message according to an embodiment of the present disclosure.
FIG. 5 is a structural block view of an apparatus for controlling video playing according to an embodiment of the present disclosure.
FIG. 6 is a schematic view of an inner structure of a computer device according to an embodiment of the present disclosure.

### DETAILED DESCRIPTION

To make the purpose, technical solutions and advantages of the present disclosure clearer and more understandable, the following is a further detailed description of the present disclosure in conjunction with the accompanying drawings and embodiments. It should be understood that the specific embodiments described herein are only to explain the present disclosure and are not intended to limit the present disclosure.

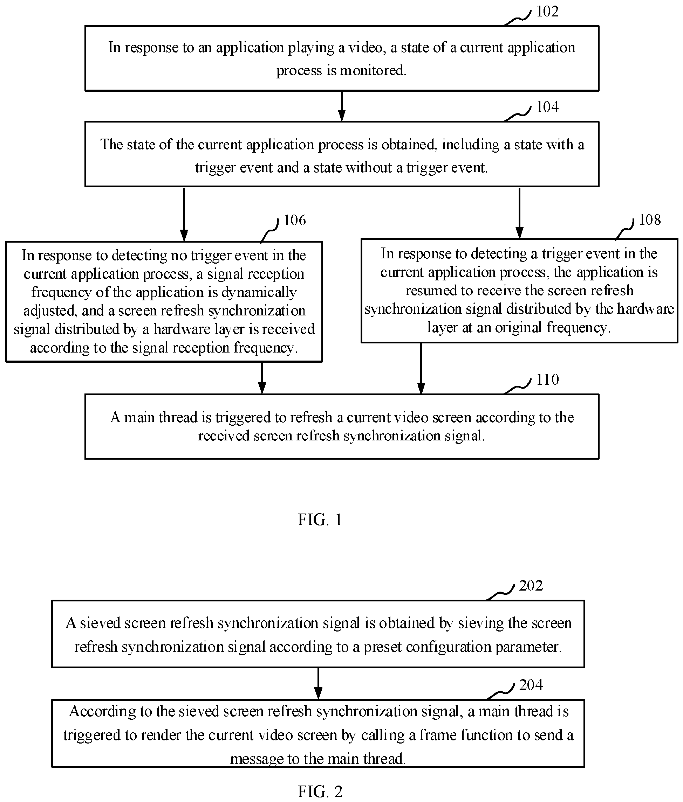

In some embodiments, as shown in FIG. 1, a method for controlling video playing is provided. The embodiments are illustrated by applying the method to a terminal, which may be, but is not limited to, various personal computers, laptops, smartphones, tablets, and portable wearable devices. It is understood that the method may also be applied to a server, and may also be applied to a system including a terminal and a server, and implemented by interaction between the terminal and the server. In the embodiments, the method includes operations at blocks illustrated in FIG. 1.

At block 102: In response to an application playing a video, a state of a current application process is monitored.

A mobile terminal is a class of embedded computer system device, and the software structure can be divided into a system software and an application software. In the software structure of the mobile terminal, the system software is mainly an operating system and a middleware. Common mobile terminal operating systems are Apple's IOS, Google's Android, HP's WebOS, open source MeeGo, Microsoft Windows, etc. Users who use different operating systems can download various types of video playing applications through an application market interface in the mobile terminal. For example, common video playing applications including but not limited to Bilibili Animation, Douyu Live, Huya Live and Iqiyi support the function of pop-up messages. Specifically, taking Android OS as an example, a user can tap a specific video playing application in a main interface of the mobile terminal to launch the application and enter a page corresponding to the video playing application. The above application process (App Process) establishes a connection with a system service program (SurfaceFlinger) through a socket during a startup process. The socket is an abstraction layer through which an application can send or receive data. When the user plays video through the application, i.e. when the application plays video in the Android operating system, the mobile terminal monitors the state of the current application process through a screen hardware driver or a key driver. That is, the real-time state of the current application process is monitored by the screen hardware driver or the key driver and reported to a corresponding listener (InputReader in the Android system).

At block 104: The state of the current application process is obtained, including a state with a trigger event and a state without a trigger event.

When the user plays the video through the application, the state of the current application process is monitored in real time by the screen hardware driver or the key driver. The mobile terminal obtains the state corresponding to the current application playing video, including the state with a trigger event and the state without a trigger event. Specifically, the user may tap a specific video playing application in the main interface of the mobile terminal and start the application to enter the page corresponding to the application. When the user plays video through the application, the user may perform a series of menu operations on the currently playing video. For example, the user may control the progress of the current video playing screen by clicking a fast forward or pause button in the current video playing interface. The user may also control the brightness and volume of the current video playing screen by sliding brightness adjustment and sound adjustment icons in the current video playing interface. That is, when the application plays video, the mobile terminal monitors the state of the current application process the screen hardware driver or the key driver. When the mobile terminal detects that the user touches the screen or presses a physical button, the mobile terminal identifies the state of the current application process as the state with a trigger event and reports the trigger event to the corresponding listener, thereby causing the system service program to distribute to the corresponding process according to different demands of the trigger event. The trigger event in the mobile terminal, i.e., a screen input event, may include a click event, a touch event, a tap event, a swipe event, etc., with which the user can perform a series of menu operations on the currently playing video of the application, such as adjusting the video playing speed, sending real-time pop-up messages, etc.

At block 106: In response to detecting no trigger event in the current application process, a signal reception frequency of the application is dynamically adjusted, and a screen refresh synchronization signal distributed by a hardware layer is received according to the signal reception frequency.

When the user plays video through the application, the state of the current application process is monitored in real time through the screen hardware driver or the key driver. When the mobile terminal detects that there is no trigger event in the current application process through the screen hardware driver or key driver (that is, the mobile terminal monitors whether the current application process receives an input event through a DynamicVsyncHelper control in the Android system, and when there is no input event, it is indicated that the user is not currently operating in the application interface), the terminal dynamically adjusts the signal reception frequency of the current application and receives the screen refresh synchronization signal distributed by the hardware layer according to the adjusted signal reception frequency. That is, the terminal strategically limits the number of times the current application receives the screen refresh synchronization signal distributed by the hardware layer, thus limiting the software screen refresh rate corresponding to the application. GPU, also a graphic processing chip, a display core, a visual processor, or a display chip, usually has a mechanism called vertical synchronization (V-Sync). When the vertical synchronization is activated, the GPU will wait for the V-sync signal from the display to be transmitted before performing a new frame of rendering and buffer update. The screen is refreshed from left to right (i.e., line refresh or horizontal scanning) for each line and from top to bottom (i.e., screen refresh or vertical scanning) line by line. When the whole screen is refreshed, i.e. a vertical refresh cycle is completed, there is a short blanking period when the V-sync signal is transmitted. Therefore, "V" in V-sync signal refers to vertical, and the screen refresh synchronization signal is the V-sync signal. Specifically, when the mobile terminal detects no trigger event in the current application process through the DynamicVsyncHelper control in the Android system, the terminal limits the signal reception frequency of the current application and receives the screen refresh synchronization signal distributed by the hardware layer according to the limited signal reception frequency, such that the terminal may change the refresh rate of the current software screen by adjusting the number of times the screen refresh synchronization signal (V-sync signal) is received per frame. In the Android system, the video frame rate is determined by a synchronization signal (V-sync signal) interval of the software screen refresh. The application receives the software V-sync signal from the system service (SurfaceFlinger) through the socket, which is the screen refresh synchronization signal. The clock signal of the hardware screen is generated by the hardware screen and distributed to SurfaceFlinger through HWComposer after processing, and finally distributed to the application. A screen refresh rate (frames per second, FPS) is the number of frames per second, which is commonly known as the number of frames in an animation or video. The FPS is to indicate the amount of information configured to save and display dynamic video. The more frames per second, the smoother the displayed action will be. In the present disclosure, the FPS may refer to the software screen refresh rate, i.e. the number of times the software draws in each second, i.e. the number of times the V-sync signal is received. When the terminal detects that there is no trigger event in the current application process, then the terminal may dynamically adjust the application to receive the screen refresh synchronization signal distributed by the hardware layer. That is, the terminal may adjust the signal reception frequency of the application, i.e. the number of times the application receives the screen refresh synchronization signal. For example, the terminal may preset in a configuration file to intercept or skip the screen refresh synchronization signal (V-sync signal) every other frame, thereby changing the refresh rate corresponding to the current software screen and limiting the refresh rate of the current software screen to a preset value range for screen refresh. For example, the terminal obtains a current software screen refresh rate of 120Hz (i.e., the video screen is refreshed 120 times per second), and may drop the V-sync signal every other frame by presetting a flag bit in the configuration file, then the terminal achieves adjusting the signal reception frequency of the application to 60Hz. That is, the terminal receives the screen refresh synchronization signal according to the signal reception frequency for 60 times per second video screen refresh, that is, the current software screen refresh rate is adjusted from 120Hz to 60Hz. Specifically, in the Android system, the application process (App process) establishes a connection with the system service program (SurfaceFlinger) through the abstract layer socket during the startup process. The system service program distributes the V-sync signal to the application process through the abstraction layer socket. After the application process receives the signal, the application process determines whether to ignore the V-sync signal this time according to the current state of the application (i.e., based on whether there is an input event). When the mobile terminal detects through the DynamicVsyncHelper control that there is no trigger event in the current application process, the terminal ignores the V-sync signal this time and waits to receive a next V-sync signal. According to the next V-sync signal received, the mobile terminal may trigger a main thread to refresh the current video screen.

At block 108: In response to detecting a trigger event in the current application process, the application is resumed to receive the screen refresh synchronization signal distributed by the hardware layer at an original frequency.

When the user plays video through the application, the state of the current application process is monitored in real time through the screen hardware driver or the key driver. When the mobile terminal detects a trigger event in the current application process through the screen hardware driver or key driver (that is, the mobile terminal whether the current application process receives an input event through the DynamicVsyncHelper control in the Android system, and when an input event exists, it is indicated that the user is currently operating in the application interface), the terminal resumes the current application to receive the screen refresh synchronization signal distributed by the hardware layer at the original frequency. That is, the terminal stops limiting the number of times the application receives the screen refresh synchronization signal distributed by the hardware layer, thereby restoring the original software screen refresh rate and allowing the current application to receive all the screen refresh synchronization signals distributed by the hardware layer at the original frequency.

At block 110: A main thread is triggered to refresh a current video screen according to the received screen refresh synchronization signal.

When the user plays video through the application, the states of the current application process is monitored in real time through the screen hardware driver or the key driver. When the mobile terminal detects that there is no trigger event in the current application process through the screen hardware driver or key driver (that is, the mobile terminal monitors whether the current application process receives the input event through the DynamicVsyncHelper control in the Android system, and when there is no input event, it is indicated that the user is not currently operating in the application interface), the terminal dynamically adjusts the signal reception frequency of the current application and receives the screen refresh synchronization signal distributed by the hardware layer according to the adjusted signal reception frequency. The terminal triggers the main thread to refresh the current video screen according to the received screen refresh synchronization signal. When the mobile terminal detects the trigger event in the current application process through the screen hardware driver or the key driver (that is, the mobile terminal whether the current application process receives an input event through the DynamicVsyncHelper control in the Android system, and when an input event exists, it is indicated that the user is currently operating in the application interface), the terminal resumes the current application to receive at the original frequency. The terminal stops limiting the number of times the application receives the screen refresh synchronization signals distributed by the hardware layer, restores the original software screen refresh rate, and allows the current application to receive all the screen refresh synchronization signals distributed by the hardware layer at the original frequency. The terminal triggers the main thread to refresh the current video screen according to the received screen refresh synchronization signal. Specifically, in the Android system, the application process establishes a connection with the system service program (SurfaceFlinger) through the abstraction layer socket during the startup process. The system service program receives the V-sync signal transmitted from the hardware layer, wraps the V-sync signal and distributes it to the application process through the abstraction layer socket. After the application process receives the signal, the application process callbacks and triggers the next frame drawing with a pre-registered FrameDisplayEventReceiver interface. When a condition is met, the main thread of the application starts to execute operations of measure, layout and draw.

In the embodiments, in response to an application playing a video, a state of a current application process is monitored. Compared with conventional video playing methods, the state of the current application process is obtained, including a state with a trigger event and a state without a trigger event. In response to detecting no trigger event in the current application process, a signal reception frequency of the application is dynamically adjusted, a screen refresh synchronization signal distributed by a hardware layer is received according to the signal reception frequency, and a main thread is triggered to refresh a current video screen according to the received screen refresh synchronization signal. In response to detecting a trigger event in the current application process, the application is resumed to receive the screen refresh synchronization signal distributed by the hardware layer at an original frequency, and a main thread is triggered to refresh a current video screen according to the received screen refresh synchronization signal. Thus, by monitoring the state of the current application process, when a trigger event is detected in the current application process, the corresponding signal reception frequency is dynamically adjusted; when a trigger event is detected in the current application process, the application is resumed to receive the screen refresh synchronization signal distributed by the hardware layer at the original frequency. That is, the software refresh rate is dynamically adjusted, effectively solving the power consumption problem of maintaining a high screen hardware refresh rate in the conventional way, ensuring the smoothness of the operation interface and reducing power consumption.

In some embodiments, dynamically adjusting the signal reception frequency may include operations at blocks illustrated in FIG. 2.

At block 202: A sieved screen refresh synchronization signal is obtained by sieving the screen refresh synchronization signal according to a preset configuration parameter.

At block 204: According to the sieved screen refresh synchronization signal, a main thread is triggered to render the current video screen by calling a frame function to send a message to the main thread.

When the user plays video through the application, the state of the current application process is monitored in real time through the screen hardware driver or the key driver. When the mobile terminal detects that there is no trigger event in the current application process through the screen hardware driver or key driver, the terminal dynamically adjusts the signal reception frequency of the current application and receives the screen refresh synchronization signal distributed by the hardware layer according to the adjusted signal reception frequency. Specifically, when the mobile terminal detects that there is no trigger event in the current application process through the screen hardware driver or the key driver, the mobile terminal sieves the screen refresh synchronization signal according to the preset configuration parameter and obtains the sieved screen refresh synchronization signal. According to the sieved screen refresh synchronization signal, the mobile terminal calls the frame function to send a message to the main thread to trigger the main thread to render the current video screen. In the Android system, after the application process receives the V-sync signal, the mobile terminal monitors the state of the current application process through the DynamicVsyncHelper control, and obtains a current time interval of the received V-sync signal, (i.e. the refresh rate of the current software screen). When the DynamicVsyncHelper control in the Android system detects that there is no trigger event in the current application process through the DynamicVsyncHelper control, the mobile terminal sieves the screen refresh synchronization signal according to the preset configuration parameter and obtains the sieved screen refresh synchronization signal. For example, the mobile terminal may preset a flag bit in the configuration parameter, and assuming that the refresh rate of the current software screen is 120 Hz, the screen refresh synchronization signal is sieved by the change of the state of the flag bit to obtain the sieved screen refresh synchronization signal, i.e., the refresh rate of the current software screen can be adjusted from 120 Hz to 60 Hz after the sieving. Further, according to the sieved screen refresh synchronization signal, the mobile terminal calls the pre-registered FrameDisplayEventReceiver function interface to callback and trigger drawing of the next frame of the screen, triggering the main thread to perform drawing-related operations on the current video screen. This makes it possible to reduce the number of screen rendering and refreshing as much as possible by adjusting the software screen refresh rate, while ensuring the smoothness of the operation interface when the application is playing video, thereby effectively reducing power consumption and solving the problem of excessive power consumption.

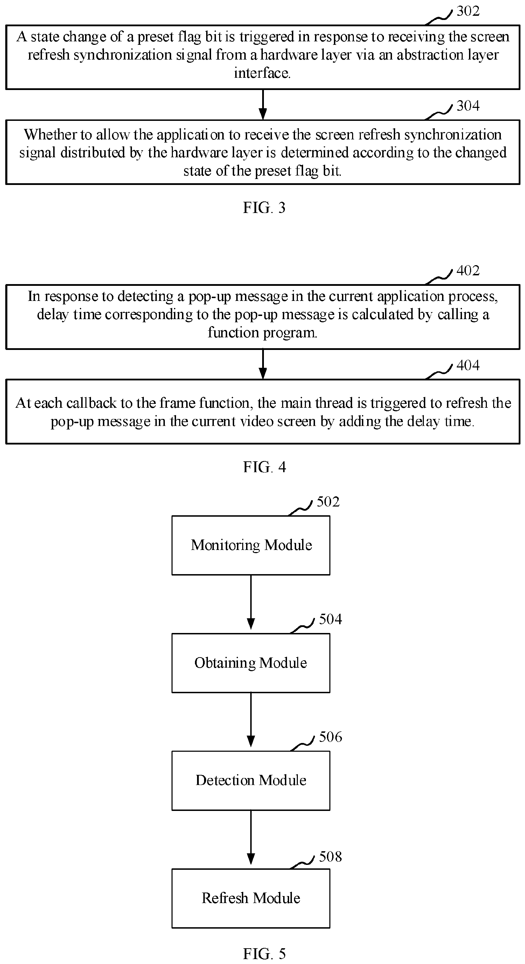

In some embodiments, the method further may include triggering a state change of a preset flag bit, which specifically includes operations at blocks illustrated in FIG. 3.

At block 302: A state change of a preset flag bit is triggered in response to receiving the screen refresh synchronization signal from a hardware layer via an abstraction layer interface.

At block 304: Whether to allow the application to receive the screen refresh synchronization signal distributed by the hardware layer is determined according to the changed state of the preset flag bit.

When the application receives the screen refresh synchronization signal distributed by the system service program (SurfaceFlinger) through the abstraction layer (Socket), the state change of the preset flag bit is triggered. According to the changed state of the preset flag bit, the mobile terminal determines whether to allow the application to receive the screen refresh synchronization signal distributed by the hardware layer next time. Specifically, when the application receives the screen refresh synchronization signal distributed by the system service program (SurfaceFlinger) through the abstraction layer (Socket), the state change of the preset flag bit is triggered. The screen refresh synchronization signal (V-sync signal) may be preset in the configuration file to be dropped every other frame, i.e., the state of the corresponding flag bit may be preset to change when the application receives the screen refresh synchronization signal (V-sync signal) every time. Further, the terminal determines whether to allow the application to receive the screen refresh synchronization signal distributed by the hardware layer next time, according to the changed state of the preset flag bit.

In some embodiments, the determining whether to allow the application to receive the screen refresh synchronization signal distributed by the hardware layer according to the changed state of the preset flag bit may include operations as followed.

In response to the changed state of the preset flag bit being zero, the screen refresh synchronization signal distributed by the hardware layer currently is received.

In response to the changed state of the preset flag bit not being zero, the screen refresh synchronization signal distributed by the hardware layer currently is skipped.

When the application receives the screen refresh synchronization signal distributed by the system service program (SurfaceFlinger) through the abstraction layer (Socket), the state change of the preset flag bit is triggered. The screen refresh synchronization signal (V-sync signal) may be preset in the configuration file to be dropped every other frame, i.e., the state of the corresponding flag bit may be preset to change when the application receives the screen refresh synchronization signal (V-sync signal) every time. In response to the changed state of the preset flag bit being zero, the mobile terminal allows the application to receive the screen refresh synchronization signal distributed by the hardware layer currently. In response to the changed state of the preset flag bit not being zero, the screen refresh synchronization signal distributed by the hardware layer currently is skipped, i.e. the mobile terminal intercepts the application from receiving the screen refresh synchronization signal distributed by the hardware layer currently. For example, when the changed state of the preset flag bit is zero, the terminal allows the application to receive the screen refresh synchronization signal distributed by the hardware layer currently. When the terminal detects that the changed state of the preset flag bit is not zero while the application is waiting to receive the next screen refresh synchronization signal, assuming that when the terminal detects that the changed state of the preset flag bit is 1, the terminal intercepts the screen refresh synchronization signal distributed by the system service program currently through the DynamicVsyncHelper control, i.e., the terminal skips this screen refresh synchronization signal. Only when the state of the flag bit meets a preset condition, the flag bit becomes true, allowing the application to receive the screen refresh synchronization signal distributed by the hardware layer currently. This makes it possible to dynamically adjust the number of times the application receives the screen refresh synchronization signal by means of the preset flag bit, eliminating the need for the terminal to maintain a high refresh rate of the screen hardware all the time, and reducing the number of screen renderings and refreshes by dynamically adjusting the software screen refresh rate, thus effectively reducing the power consumption of the terminal.

In some embodiments, after the resuming the application to receive the screen refresh synchronization signal distributed by the hardware layer at the original frequency in response to detecting the trigger event in the current application process, the method may further include operations of calculating delay time corresponding to a pop-up message by calling a function program, specifically including operations at blocks illustrated in FIG. 4.

At block 402: In response to detecting a pop-up message in the current application process, delay time corresponding to the pop-up message is calculated by calling a function program.

At block 404: At each callback to the frame function, the main thread is triggered to refresh the pop-up message in the current video screen by adding the delay time.

When the user plays video through the application, the state of the current application process is monitored in real time through the screen hardware driver or the key driver. When the mobile terminal detects a trigger event in the current application process through the screen hardware driver or key driver, the terminal resumes the application to receive the screen refresh synchronization signal distributed by the hardware layer at the original frequency. When the application plays video, the user can send a pop-up message in real time to participate in the interaction. When the mobile terminal detects the pop-up message in the current application process, the mobile terminal calls the function program to calculate the delay time corresponding to the pop-up message. When the mobile terminal calls back the frame function each time, the mobile terminal adds the delay time to trigger the main thread to refresh the pop-up message in the current video screen. The speed of the pop-up message is determined by a displacement distance of the pop-up message after each refresh relative to the last refresh. The displacement distance of each refresh is a fixed value. Assuming that the displacement distance is a unit distance, the displacement distance may be represented according to the following formula: Speed of pop-up message = Displacement distance/Time, i.e., the speed of the pop-up message is determined by the time interval of the software refresh. When the software refresh rate is not adjusted, it is assumed that the mobile terminal obtains the current software refresh rate of 120Hz, which means that the pop-up message travels 120 unit distances per second. After the mobile terminal dynamically adjusts the software refresh rate to 60Hz, the pop-up message moves 60 unit distances per second, which makes the speed of the pop-up message inconsistent when the software refresh rate is dynamically adjusted. Therefore, when the mobile terminal detects the presence of the pop-up message in the current application process, it may call the function program to calculate the delay time corresponding to the pop-up message. A corresponding calculation formula may be preset in the function program, that is, Period T=1/Frequency f. The terminal can calculate the corresponding period time according to different frequencies, and the corresponding time difference between two different frequencies is the delay time. For example, the mobile terminal obtains the refresh rate of 120Hz for the previous frame, and when the mobile terminal detects a trigger event in the current application process, it resumes the application to receive all the screen refresh synchronization signals distributed by the hardware layer at the original frequency, i.e. the mobile terminal obtains the refresh rate of 60Hz for the current frame. When the refresh rate is limited to 60Hz, the function program is called to calculate the corresponding pop-up message period as 16.6ms per frame. When the refresh rate is resumed to 120Hz, the function program is called to calculate the corresponding pop-up message period as 8.3ms per frame. The period time difference between the two is 8.3ms, i.e. the delay time corresponding to the pop-up message is calculated as 8.3ms. In the Android system, the pop-up message is realized by registering the callback of FrameCallback with Choreographer every frame. When the mobile terminal executes the callback FrameCallback each time, the delay time is added to trigger the main thread to refresh the pop-up message in the current video screen. This makes it possible to dynamically select whether to restrict the pop-up message callback according to the frame rate of the current video playing screen. By adding a suitable delay time to each callback to solve the problem of inconsistent pop-up message speed, the consistency and smoothness of pop-up messages can be guaranteed even when the software refresh rate is dynamically adjusted.

In some embodiments, in response to detecting the pop-up message in the current application process, the method may include operations as followed.

Time interval for the current application process to receive the screen refresh synchronization signal is obtained.

According to the time interval of the screen refresh synchronization signal, the screen refresh rate corresponding to the current application process is calculated.

According to the screen refresh rate, whether to add the delay time to refresh the pop-up message in the current video screen is determined.

When the mobile terminal detects the pop-up message in the current application process, the mobile terminal may obtain the time interval for the current application process to receive the screen refresh synchronization signal, i.e., the mobile terminal obtains the period corresponding to the current pop-up message. The mobile terminal may calculate the screen refresh rate corresponding to the current application process according to the time interval of the screen refresh synchronization signal. According to the screen refresh rate corresponding to the current application process, the mobile terminal determines whether to add the delay time to refresh the pop-up message in the current video screen. For example, the mobile terminal may obtain the time interval for the current application process to receive the screen refresh synchronization signal as 8.3ms, that is, the current pop-up message corresponds to a period of 8.3ms. The terminal presets the corresponding calculation formula according to the function program (i.e., the Period T=1/Frequency f), and the terminal may calculate the corresponding frequency according to different periods. The frequency f herein may be 120Hz. Further, according to the screen refresh rate corresponding to the current application process, the mobile terminal may determine whether to add the delay time to refresh the pop-up message in the current video screen. For example, when the mobile terminal obtains the screen refresh rate of the current application process being also 120Hz, i.e., the same as the frequency f of the pop-up message, the mobile terminal determines that there is no need to add the delay time to refresh the pop-up message in the current video screen directly. When the mobile terminal obtains the screen refresh rate corresponding to the current application process being not the same as the frequency f of the pop-up message, the mobile terminal determines that the delay time is required to refresh the pop-up message in the current video screen. This enables the terminal to determine whether to add the delay time to refresh the pop-up message in the current video screen according to the screen refresh rate corresponding to the current application, thereby solving the problem of inconsistent pop-up message speed and dynamically adjusting the refresh rate corresponding to the pop-up message, thus ensuring the consistency and smoothness of the pop-up messages and the playing screen.

In some embodiments, after the resuming the application to receive the screen refresh synchronization signal distributed by the hardware layer at the original frequency in response to detecting the trigger event in the current application process, the method may further include operations of refreshing the current pop-up message, specifically including operations as followed.

In response to detecting a pop-up message in the current application process, the screen refresh synchronization signal is sieved according to the preset configuration parameter to obtain the sieved screen refresh synchronization signal.

According to the sieved screen refresh synchronization signal, the main thread is triggered to refresh a current pop-up message by calling a frame function to send a message to the main thread.

When a pop-up message is detected in the current application process, besides adding the delay time to each callback, the mobile terminal may also sieve the screen refresh synchronization signal according to the preset configuration parameter to obtain the sieved screen refresh synchronization signal. The mobile terminal calls the frame function to send a message to the main thread according to the sieved screen refresh synchronization signal, and triggers the main thread to refresh the current pop-up message. That is, by dynamically adjusting the refresh rate corresponding to the pop-up message to solve the problem of inconsistent pop-up message speed, the refresh rate corresponding to the pop-up message can be dynamically adjusted at the same time even when the software refresh rate is dynamically adjusted, such that the consistency and smoothness of the pop-up messages may be guaranteed.

It should be understood that although the individual operations in the flowchart of FIGS. 1-4 are shown sequentially as indicated by the arrows, the operations are not necessarily executed sequentially in the order indicated by the arrows. Except as expressly stated herein, there is no strict sequential limitation on the execution of the operations, and the operations may be executed in other orders. Moreover, at least some of the operations in FIGS. 1-4 may include multiple steps or multiple stages that are not necessarily performed at the same moment, but may be performed at different moments, and the order in which these steps or stages are performed is not necessarily sequential, but may be performed alternately with other operations or at least some of the steps or stages in other operations.

In some embodiments, as shown in FIG. 5, an apparatus for controlling video playing is provided, including: a monitoring module 502, an obtaining module 504, a detection module 506, and a refresh module 508.

The monitoring module 502 is configured to monitor a state of a current application process in response to an application playing a video.

The obtaining module 504 is configured to obtain the state of the current application process, including a state with a trigger event and a state without a trigger event.

The detection module 506 is configured to: in response to detecting no trigger event in the current application process, dynamically adjust a signal reception frequency of the application and receive a screen refresh synchronization signal distributed by a hardware layer according to the signal reception frequency; and in response to detecting a trigger event in the current application process, resume the application to receive the screen refresh synchronization signal distributed by the hardware layer at an original frequency.

The refresh module 508 is configured to trigger a main thread to refresh a current video screen according to the received screen refresh synchronization signal.

In some embodiments, the apparatus further includes: a sieving module and a calling module.

The sieving module is configured to sieve the screen refresh synchronization signal according to the preset configuration parameter and obtain a sieved screen refresh synchronization signal. The call module is configured to trigger a main thread to render the current video screen by calling a frame function to send a message to the main thread according to the sieved screen refresh synchronization signal.

In some embodiments, the apparatus further includes: a trigger module and a determination module.

The trigger module is configured to trigger a state change of a preset flag bit in response to receiving the screen refresh synchronization signal from a hardware layer via an abstraction layer interface. The determination module is configured to determine whether to allow the application to receive the screen refresh synchronization signal distributed by the hardware layer according to the changed state of the preset flag bit.

In some embodiments, the determination module is further configured to receive the screen refresh synchronization signal distributed by the hardware layer currently in response to the changed state of the preset flag bit being zero; and skip the screen refresh synchronization signal distributed by the hardware layer currently in response to the changed state of the preset flag bit not being zero.

In some embodiments, the calling module is further configured to calculate delay time corresponding to the pop-up message by calling a function program in response to detecting a pop-up message in the current application process. The refresh module is further configured to, at each callback to the frame function, trigger the main thread to refresh the pop-up message in the current video screen by adding the delay time.

In some embodiments, the obtaining module is further configured to obtain time interval for the current application process to receive the screen refresh synchronization signal. The apparatus further includes a calculation module configured to calculate the screen refresh rate corresponding to the current application process according to the time interval of the screen refresh synchronization signal. The determination module is further configured to determine whether to add the delay time to refresh the pop-up message in the current video screen according to the screen refresh rate.

In some embodiments, the detection module is further configured to, in response to detecting a pop-up message in the current application process, sieve the screen refresh synchronization signal according to the preset configuration parameter to obtain the sieved screen refresh synchronization signal. The calling module is further configured to trigger the main thread to refresh a current pop-up message by calling a frame function to send a message to the main thread according to the sieved screen refresh synchronization signal.

The specific limitations of the apparatus for controlling video playing may be found in the limitations of the method or controlling video playing above and will not be repeated here. The modules of the apparatus for controlling video playing may be implemented in whole or in part by software, hardware and combinations thereof. Each of the above modules may be embedded in hardware form in or independent of the processor in a computer device, or may be stored in software form in memory in the computer device such that the processor can be called to perform the operations corresponding to each of the above modules.

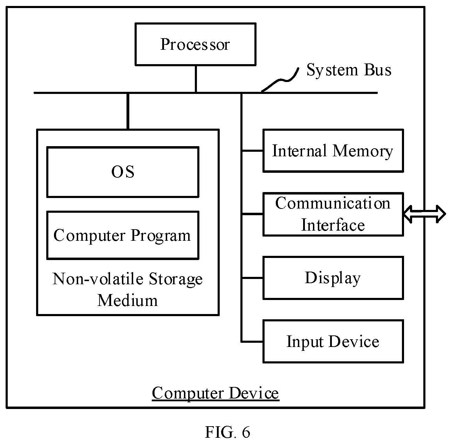

In some embodiments, a computer device is provided, which may be a terminal, the internal structure of which may be illustrated in FIG. 6. The computer device includes a processor connected via a system bus, a memory, a communication interface, a display, and an input device. The processor of the computer device is configured to provide computing and control capabilities. The memory of the computer device includes a non-volatile storage medium and an internal memory. The non-volatile storage medium stores an operating system and a computer program. The internal memory provides an environment for operation of the operating system and the computer program in the non-volatile storage medium. The communication interface of the computer device is configured to communicate with an external terminal by wired or wireless means, and the wireless means can be implemented by Wi-Fi, carrier network, near field communication (NFC) or other technologies. The computer program is executed by the processor to implement the method for controlling video playing. The display of the computer device may be a liquid crystal display or an e-ink display. The input device of the computer device may be a touch layer covered by the display, or a button, trackball or touchpad arranged on a housing of the computer device, or an external keyboard, touchpad or mouse, etc.

It will be understood by those skilled in the art that the structure illustrated in FIG. 6, which is only a block view of a portion of the structure associated with the present disclosure, does not constitute a limitation of the computer device to which the present disclosure is applied, and that a specific computer device may include more or fewer components than shown in the figures, or combine certain components, or have a different arrangement of components.

In some embodiments, a computer device is provided including a memory, a processor, and a computer program stored in the memory and runnable on the processor, the processor executing the computer program to implement the operations of each of the method embodiments described above.

It will be understood by those skilled in the art that achieving all or part of the processes in the methods of the above embodiments is possible by means of a computer program to instruct the relevant hardware to do so. The computer program may be stored in a non-volatile computer readable storage medium, and when the computer program is executed, processes such as those of the embodiments of the methods described above may be performed. Any reference to a memory, storage, database, or other medium used in the embodiments provided in the present disclosure may include at least one of non-volatile and volatile memory. The non-volatile memory may include read-only memory (ROM), magnetic tape, floppy disk, flash memory, or optical memory, among others. The volatile memory may include random access memory (RAM) or external cache memory. As an illustration and not a limitation, the RAM can be in various forms, such as static random access memory (SRAM) or dynamic random access memory (DRAM), etc.

The technical features of the above embodiments can be combined in any way. For a concise description, not all possible combinations of each technical feature of the above embodiments are described, however, as long as there is no contradiction in the combination of these technical features, they should be considered as the scope of this specification.

The above described embodiments express only several embodiments of the present disclosure, and their descriptions are more specific and detailed, but they should not be construed as a limitation of the scope of the present disclosure. It should be noted that for those skilled in the art, a number of variations and improvements can be made without departing from the conception of the present disclosure, and these belong to the scope of present disclosure. Therefore, the scope of the present disclosure shall be subject to the attached claims.

## Claims

1. A method for controlling video playing, **characterized by** comprising:
monitoring (102) a state of a current application process in response to an application playing a video;
obtaining (104) the state of the current application process comprising a state with a trigger event and a state without a trigger event;
dynamically adjusting (106) a signal reception frequency of the application and receiving (106) a screen refresh synchronization signal distributed by a hardware layer according to the signal reception frequency in response to detecting no trigger event in the current application process;
resuming (108) the application to receive the screen refresh synchronization signal distributed by the hardware layer at an original frequency in response to detecting a trigger event in the current application process; and
triggering (110) a main thread to refresh a current video screen according to the received screen refresh synchronization signal.

2. The method according to claim 1, wherein the dynamically adjusting (106) the signal reception frequency of the application comprises:
sieving (202) the screen refresh synchronization signal according to a preset configuration parameter and obtaining (202) a sieved screen refresh synchronization signal; and
triggering (204) a main thread to render the current video screen by calling a frame function to send a message to the main thread according to the sieved screen refresh synchronization signal.

3. The method according to claim 2, further comprising:
triggering (302) a state change of a preset flag bit in response to receiving the screen refresh synchronization signal from a hardware layer via an abstraction layer interface; and
determining (304) whether to allow the application to receive the screen refresh synchronization signal distributed by the hardware layer according to the changed state of the preset flag bit.

4. The method according to claim 3, wherein the determining (304) whether to allow the application to receive the screen refresh synchronization signal distributed by the hardware layer according to the changed state of the preset flag bit comprises:
receiving the screen refresh synchronization signal distributed by the hardware layer currently in response to the changed state of the preset flag bit being zero; and
skipping the screen refresh synchronization signal distributed by the hardware layer currently in response to the changed state of the preset flag bit not being zero.

5. The method according to claim 1, after the resuming (108) the application to receive the screen refresh synchronization signal distributed by the hardware layer at the original frequency in response to detecting the trigger event in the current application process, further comprising:
obtaining (402) delay time corresponding to the pop-up message by calling a function program in response to detecting a pop-up message in the current application process; and
at each callback to the frame function, triggering (404) the main thread to refresh the pop-up message in the current video screen by adding the delay time.

6. The method according to claim 5, before the obtaining (402) the delay time corresponding to the pop-up message by calling the function program, further comprising:
obtaining time interval for the current application process to receive the screen refresh synchronization signal;
obtaining a screen refresh rate corresponding to the current application process according to the time interval of the screen refresh synchronization signal; and
determining whether to add the delay time to refresh the pop-up message in the current video screen according to the screen refresh rate.

7. The method according to claim 1, after the resuming (108) the application to receive the screen refresh synchronization signal distributed by the hardware layer at the original frequency in response to detecting the trigger event in the current application process, further comprising:
in response to detecting a pop-up message in the current application process, sieving the screen refresh synchronization signal according to a preset configuration parameter and obtaining a sieved screen refresh synchronization signal; and
triggering the main thread to refresh a current pop-up message by calling a frame function to send a message to the main thread according to the sieved screen refresh synchronization signal.

8. The method according to claim 1, wherein the dynamically adjusting (106) the signal reception frequency of the application comprises:
intercepting or skipping the screen refresh synchronization signal every other frame.

9. An apparatus for controlling video playing, **characterized by** comprising:
a monitoring module (502), configured to monitor a state of a current application process in response to an application playing a video;
an obtaining module (504), configured to obtain the state of the current application process, including a state with a trigger event and a state without a trigger event;
a detection module (506), configured to: in response to detecting no trigger event in the current application process, dynamically adjust a signal reception frequency of the application and receive a screen refresh synchronization signal distributed by a hardware layer according to the signal reception frequency; and
in response to detecting a trigger event in the current application process, resume the application to receive the screen refresh synchronization signal distributed by the hardware layer at an original frequency; and
a refresh module (508), configured to trigger a main thread to refresh a current video screen according to the received screen refresh synchronization signal.

10. A computer device, **characterized by** comprising a memory and a processor; wherein the memory stores a computer program, and the processor is configured to execute the computer program to perform a method for controlling video playing according to any one claims 1-8.

## Amended claims

### Amended claims in accordance with Rule 137(2) EPC.

1. A method for controlling video playing, comprising:
monitoring (102) a state of a current application process in response to an application playing a video;
obtaining (104) the state of the current application process comprising a state with a trigger event and a state without a trigger event;
dynamically adjusting (106) a signal reception frequency of the application and receiving (106) a screen refresh synchronization signal distributed by a hardware layer according to the signal reception frequency in response to detecting no trigger event in the current application process;
resuming (108) the application to receive the screen refresh synchronization signal distributed by the hardware layer at an original frequency in response to detecting a trigger event in the current application process; and
triggering (110) a main thread to refresh a current video screen according to the received screen refresh synchronization signal;
**characterized in that** after the resuming (108) the application to receive the screen refresh synchronization signal distributed by the hardware layer at the original frequency in response to detecting the trigger event in the current application process, the method further comprises:
in response to detecting a pop-up message in the current application process, obtaining (402) delay time corresponding to the pop-up message by calling a function program; and
at each callback to a frame function, triggering (404) the main thread to refresh the pop-up message in the current video screen by adding the delay time to the callback;
wherein the current video screen is displayed in a first refresh frequency F1 in response to detecting no trigger event in the current application process, and the current video screen is displayed in a second refresh frequency F2 in response to detecting a trigger event in the current application process;
the delay time is calculated by 1/F1-1/F2.

2. The method according to claim 1, wherein the dynamically adjusting (106) the signal reception frequency of the application comprises:
sieving (202) the screen refresh synchronization signal according to a preset configuration parameter and obtaining (202) a sieved screen refresh synchronization signal; and
triggering (204) the main thread to render the current video screen by calling the frame function to send a message to the main thread according to the sieved screen refresh synchronization signal.

3. The method according to claim 2, further comprising:
triggering (302) a state change of a preset flag bit in response to receiving the screen refresh synchronization signal from a hardware layer via an abstraction layer interface; and
determining (304) whether to allow the application to receive the screen refresh synchronization signal distributed by the hardware layer according to the changed state of the preset flag bit.

4. The method according to claim 3, wherein the determining (304) whether to allow the application to receive the screen refresh synchronization signal distributed by the hardware layer according to the changed state of the preset flag bit comprises:
receiving the screen refresh synchronization signal distributed by the hardware layer currently in response to the changed state of the preset flag bit being zero; and
skipping the screen refresh synchronization signal distributed by the hardware layer currently in response to the changed state of the preset flag bit not being zero.

5. The method according to claim 1, before the obtaining (402) the delay time corresponding to the pop-up message by calling the function program, further comprising:
obtaining time interval for the current application process to receive the screen refresh synchronization signal;
obtaining a screen refresh rate corresponding to the current application process according to the time interval of the screen refresh synchronization signal; and
determining whether to add the delay time to refresh the pop-up message in the current video screen according to the screen refresh rate.

6. The method according to claim 1, wherein the dynamically adjusting (106) the signal reception frequency of the application comprises:
intercepting or skipping the screen refresh synchronization signal every other frame.

7. A computer device, **characterized by** comprising a memory and a processor; wherein the memory stores a computer program, and the processor is configured to execute the computer program to perform a method for controlling video playing according to any one claims 1-6.
